# EUROPEAN PATENT APPLICATION

(11) **EP 4 266 008 A1**
(43) Date of publication of application: **25.10.2023**
(21) Application number: 23167903.6
(22) Date of filing: 14.04.2023
(51) Int. Cl.: G01D 11/02, G01D 11/24, G01D 11/30, G01P 1/02, G01P 3/44, B61F 15/26, F16C 41/00, F16C 33/72

(54) **SENSOR ACCOMMODATION OPENING COVER**

(30) Priority: 21.04.2022 IT 202200007841
(71) Applicant: Aktiebolaget SKF, 415 50 Göteborg (SE)
(72) Inventor: Varnoux, Laurent, 37550 Saint Avertin (FR); Le Moigne, Thierry, 37230 Luynes (FR); Prouteau, Thierry, 37100 Tours (FR)
(74) Representative: Tedeschini, Luca

(57) **Abstract**

Disclosed is a cover (1) for protecting a sensor accommodation opening (2) within a component (4), for example an axle box, wherein the cover (1) comprises a gasket (8) being arrangeable around the sensor accommodation opening (2), a cover plate (10) arranged on the gasket (8) for closing the sensor accommodation opening(2) and fixing means (22) for fixing the cover plate (10) to the component (4).

## Description

The present invention relates to a sensor accommodation opening cover according to claim 1.

Several components, for example bearings or axle boxes, need sensors to monitor different parameters of the respective component. Such sensors may be arranged in a hole within the component. The sensors may be exposed to the environment, which means that, for example, contaminants, like dust or liquids, may enter into the sensor hole. Until now, plugs are used for protecting the sensor and/or the sensor accommodation opening. These plugs are typically made of steel and have holes for fixing the plug to the component. However, the manufacturing of steel is expensive. Further, the known plugs are massive and thus contribute weight to the component.

It is therefore object of the present invention to provide a protection for sensors or sensor holes which is cost-efficient and lightweight.

This object is solved by the sensor accommodation opening cover according to claim 1.

The sensor accommodation opening cover may be used for closing a sensor accommodation opening within a component. The component may be for example an axle box, for instance a railway axle box or a bearing or the like. In particular, the component may need to be monitored and for this, a sensor may be mounted at the component. Hereby, the sensor may be used for monitoring any parameters or conditions of the component.

In order to accommodate such a sensor, a hole may be formed in the component for receiving the sensor. This means that a sensor, possibly together with a sensor housing, may be arranged within the component to be monitored. The sensor accommodation opening cover may be used for protecting the sensor when being arranged within the component or for protecting the sensor accommodation opening without sensor. For this purpose, the cover comprises a gasket being arrangeable around the sensor accommodation opening, a cover plate arranged on the gasket for closing the sensor accommodation opening and fixing means for fixing the cover plate to the component.

The cover plate and/or the gasket may be manufactured in any kind of form being suitable for covering the sensor accommodation opening. Further, the cover plate and the gasket may have the same form or may have different forms, as will be explained in further detail below. For example, the cover plate may have a substantially rectangular form for covering the sensor accommodation opening. Alternatively, the cover plate may be circular shaped, squared shaped, oval shaped or the like. Further, the size of the cover plate and/or the gasket is suitable for covering the sensor accommodation opening and particularly corresponds at least to the size of the sensor accommodation opening or is greater than the size of the sensor accommodation opening.

The cover plate, which covers the gasket and the sensor accommodation opening, and the gasket, being arranged around the sensor accommodation opening, in combination may be used for covering and protecting the sensor accommodation opening. Alternatively, the cover plate and the gasket may be used for covering a sensor being arranged within the sensor accommodation opening and for protecting such a sensor.

In a further embodiment, a plug may be used for covering the sensor accommodation opening or for covering a sensor being arranged within the sensor accommodation opening. For example, such a plug may be made of plastic material. The plug may comprise a side wall or several side walls, for example in the form of a cylinder. The side wall(s) is/are adapted to the form of the sensor accommodation opening. The plug may be arranged in the sensor accommodation opening by inserting the side wall(s) within the sensor accommodation opening. A closed side of the plug, for example a closed end side of the cylinder-shaped side wall, may be arranged substantially aligned with a surface of the component in which the sensor opening is formed. The closed side of the plug may comprise a collar so that the plug may be supported by the component, in particular an edge of the sensor accommodation opening. Thus, the cover as a whole may be used for protecting the plug, e.g., for avoiding a dismounting of the plug and for protecting the plug against contamination and/or UV light or may serve as such a plug for protecting the sensor.

According to this embodiment, when a plug is used, the gasket and the cover plate are arrangeable around and/or on the plug being received in the sensor accommodation opening and are configured to secure the plug within the sensor accommodation opening. The gasket may preferably be arranged around the plug and may provide a distance between the cover plate and the plug. Further, the gasket may provide a sealing function so that the plug is protected against contaminants. The cover plate may then be arranged on the gasket and the plug for securing both in place. Also the plug itself may provide a sealing function.

According to a further embodiment, a sealing paste is arranged between the side wall of the plug and a side wall of the sensor accommodation opening being in contact with the plug. The sealing paste may be a viscous material which provides a sealing effect. For example, the sealing paste may comprise grease, silicone, or the like.

Such a sealing paste may add an additional sealing effect to the combination of plug, gasket and cover plate and may thus improve the protection of the sensor. The sealing paste may be arranged along the complete height of the side wall of the plug and/or side wall of the sensor accommodation opening. Alternatively, the sealing paste may be arranged at a part of the height of the side wall of the sensor accommodation opening and/or the side wall of the sensor accommodation opening. In the latter case, the sealing paste is arranged preferably at the upper portion of the height of the side wall of the sensor accommodation opening and/or the side wall of the sensor accommodation opening.

As described above, the plug may comprise a collar being arrangeable on an edge of the sensor accommodation opening. In this case, the sensor accommodation opening cover may further comprising a sealing ring, for example an O-ring, being arranged between the collar of the plug and the edge of the sensor accommodation opening. Such an O-ring may further improve the sealing effect between the sensor accommodation opening and the plug.

The gasket may serve as a distance ring between the cover plate and the component. In addition, the gasket may seal the sensor accommodation opening against the environment, in particular when no plug is used.

The cover plate and/or the gasket may preferably be made of an elastomeric material, a polymeric material and/or a metallic material. For example, the cover plate may be made of a more rigid material, such as steel or any other metallic material. The gasket may be made of a more elastic material, such as an elastomeric material. This provides the advantage of a lightweight cover. Further, the manufacturing of such a cover is cost efficient.

The fixing means may be any kind of fixing means being able to fix the cover with the component arranged over the sensor accommodation opening. Preferably, the fixing means can be used for assembling and for de-assembling the cover and the component. This means that the fixing means may preferably provide a detachable connection between the cover and the component.

According to an embodiment, the gasket and the cover plate are integrally formed. The gasket and the cover plate may be manufactured as one piece, for example by injection molding. Alternatively, the gasket and the cover plate may be integrally fixed to each other, for example using an adhesive or by being merged.

In another embodiment, the gasket and the cover plate are separate elements. In this case, the gasket and the cover plate are fixed to each other and to the component by the fixing means. Having separate elements may facilitate the manufacturing process as each element may be produced separately, for example using simple, less complex molding forms.

According to a further embodiment, the cover plate and/or the gasket comprise holes for receiving the fixing means. If the cover plate and the gasket are manufactured as one integral element, it is sufficient if one of them comprises holes for receiving the fixing means. If the gasket and the cover plate are separate elements, it may be beneficial if both have holes so that the cover plate and the gasket may be connected to the component as well as to each other.

The gasket may have any suitable form and may preferably have a ring form. For example, the gasket may be a washer, e.g., made of steel or any other kind of material as explained above. Further, the gasket may be an O-ring, e.g., made of a plastic or elastomeric material.

According to a further embodiment, the cover comprises a sealing ring being arranged around the sensor accommodation opening and between the gasket and the sensor accommodation opening for sealing the accommodation opening. In this embodiment, the plug as described above may be omitted and the sensor accommodation opening is completely sealed and protected by the combination of the sealing ring, the gasket, and the cover plate. The sealing ring, for example an O-ring may, be circular shaped or may be rectangular shaped in cross section. The sealing ring may be made for example of an elastomeric material, but may also be made of any other kind of material like metal (e.g., copper) or polymer.

According to a further embodiment, the fixing means are screws and/or bolts. Any other kind of fixing means may also be used. Preferably, the fixing means provide a detachable connection between the cover and the component as also described above.

Further preferred embodiments are defined in the dependent claims as well as in the description and the figures. Thereby, elements described or shown in combination with other elements may be present alone or in combination with other elements without departing from the scope of protection.

In the following, preferred embodiments of the invention are described in relation to the drawings, wherein the drawings are exemplarily only, and are not intended to limit the scope of protection. The scope of protection is defined by the accompanied claims, only.

The figures show:
Fig. 1: a cross section view of a first embodiment of a sensor accommodation opening cover;
Fig. 2: an exploded view of the sensor accommodation opening cover of Fig. 1;
Fig. 3: a cross section view of a second embodiment of a sensor accommodation opening cover;
Fig. 4: a cross section view of a third embodiment of a sensor accommodation opening cover;
Fig. 5: a cross section view of a fourth embodiment of a sensor accommodation opening cover; and
Fig. 6: a cross section view of the fourth embodiment of the sensor accommodation opening cover.

In the following same or similar functioning elements are indicated with the same reference numerals.

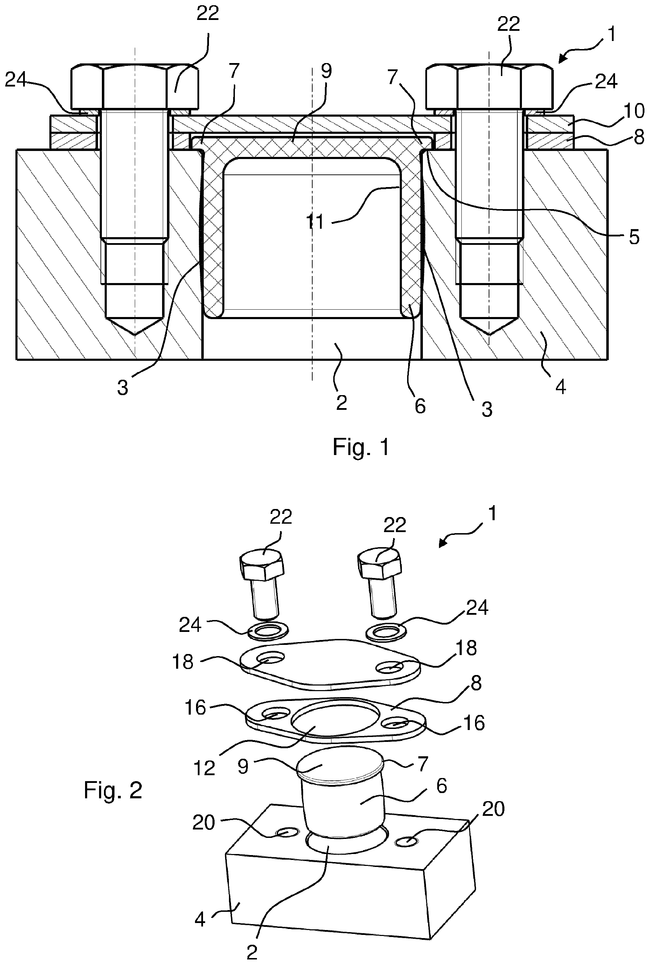

Fig. 1 shows a sensor accommodation opening cover 1 which may be used for closing a sensor accommodation opening 2 within a component 4. The component 4 may be for example a railway axle box or any other kind of component in which a sensor may be arranged. The sensor accommodation opening 2 may be a hole being formed in the component 4 for receiving a sensor (not shown).

In the embodiments as shown in Figs. 1 and 2, the sensor accommodation opening 2 may be closed by a plug 6. However, it should be noted that the plug 6 may also be omitted and that the functions of the plug 6 may be assumed by the cover 1. The plug 6 may comprise a collar 7 which may rest on the component 4, in particular an edge of the sensor accommodation opening 2. The plug 6 has a side wall 11 (or several side walls 11 depending on the form of the plug 6). For example, the side wall 11 may be in the form of a cylinder. The side wall 11 is particularly adapted to the form of the sensor accommodation opening 2. The side wall 11 of the plug 6, when being arranged in the sensor accommodation opening 2, is in contact with a side wall 3 of the sensor accommodation opening 2. For closing the sensor accommodation opening 2, the plug 6 has a closed side or cap 9.

The cover 1 serves as a protection for the sensor when being arranged within the component 4 or at least as a protection for the sensor accommodation opening 2, also without sensor. To achieve such a protection, for example against contaminants, the cover 1 comprises a gasket 8 being arrangeable around the sensor accommodation opening 2 and a cover plate 10 arranged on the gasket 8 for closing the sensor accommodation opening 2.

It should be noted that, although the gasket 8 and the cover plate 10 are shown as separate elements, they may also be integrally formed as one single element. Further, the specific shape of the gasket 8 and the cover plate 10 as shown in the figures is only exemplarily and any other shape may be used which achieves the same functionalities. For example, the gasket 8 and the cover plate 10 may have a rectangular or circular shape and/or the gasket 8 and the cover plate 10 may have different shapes. In the following, the underlying principles and functionalities of the cover 1 and its elements will be described, and it will be apparent that the same principles and functionalities may be achieved when using different shapes.

The gasket 8 comprises an opening 12 which is suitable to receive the plug 6 or to be arranged around the sensor accommodation opening 2. The cover plate 10 does not comprise such an opening but is configured to cover the plug 6 and/or the sensor accommodation opening 2 as well as the opening 12 of the gasket 8. The gasket 8 serves as a distance ring between the component 8 and the cover plate 10 and/or as a sealing element between the sensor accommodation opening 2 and the environment.

The cover plate 10 provides a protection for the plug 6 so that the plug 6 cannot dismount from the sensor accommodation opening 2. Further, if no plug 6 is used, the cover plate 10 seals the sensor accommodation opening 2 against the environment. Thus, the cover 1 as a whole may be used for protecting the plug 6, e.g., for avoiding a dismounting of the plug 6 and for protecting the plug 6 against contamination and/or UV light or may serve as such a plug 6 for protecting a sensor.

The gasket 8 as well as the cover plate 10 comprises holes 16, 18 which are aligned with holes 20 of the component 4. The holes, 16, 18, 20 receive fixing means 22, which may be screws or bolts. In the shown embodiment, distance rings 24 are arranged between the cover plate 10 and the fixing means 22, which can also be omitted. The fixing means are used for securing the cover plate 10 and the gasket 8 to the component 4. By this, also the plug 6 is secured in place. If the gasket 8 is ring shaped and does not comprise any holes 16, the fixing means 22 are used for connecting the cover plate 10 with the component 4, which secures at the same time the gasket 8 and the plug 6 to the component 4.

The cover plate 10 and/or the gasket 8 may be made of plastic material, for example polymeric material, or any other suitable material, for example steel (potentially with a coating, such as an anti-corrosion coating), stainless steel, etc. The cover plate 10 and the gasket 8 may also be made of different materials, for example the cover plate 10 may be made of steel and the gasket 8 may be made of a plastic material.

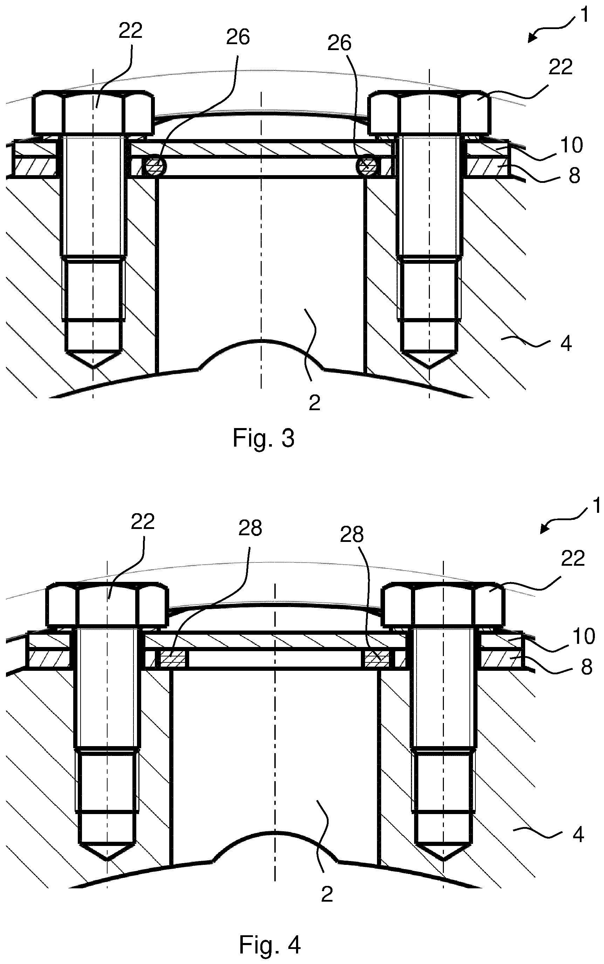

According to a further embodiment as shown in Fig. 3, the plug 6 may be omitted and a sealing ring, for example an O-ring, 26 may be used. The sealing ring 26 may be made of an elastomeric material or any other kind of material such as a polymeric material or metal material. The sealing ring may be used for sealing the sensor accommodation opening 2. As can be seen in Fig. 3, the sealing ring may be circular in cross-section. Instead of the circular sealing ring 26 of Fig. 3, a sealing ring 28 may be used which has a rectangular cross-section as illustrated in Fig. 4. Alternatively, such a sealing ring 26, 28 may also be used in combination with a plug 6 for improving the sealing functionalities.

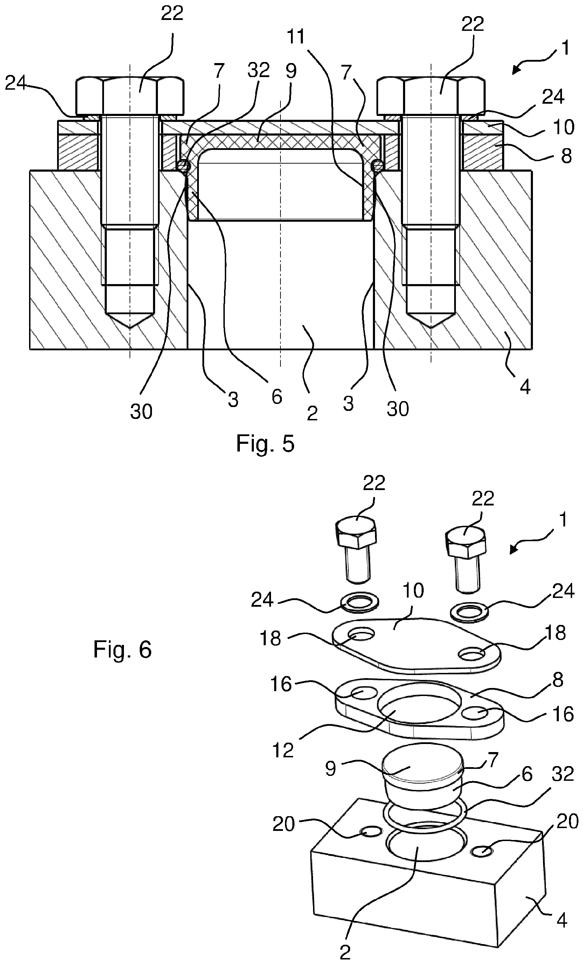

In a further embodiment as shown in Fig. 5, when using the plug 6 as described above, a sealing paste 30 is arranged between the side wall 11 of the plug 6 and the side wall 3 of the sensor accommodation opening 2. The sealing paste 30, which is a being in contact with the plug. The sealing paste 30 provides an additional sealing effect to the combination of plug 6, gasket 8 and cover plate 10.

As shown in Fig. 5, the sealing paste 30 may arranged along a portion of the height of the side wall 11 of the plug 6. Alternatively, the sealing paste 30 may also be applied to the complete height of the side wall 11, i.e., may be disposed on the complete side wall 11.

An additional sealing effect may be provided when using a sealing ring 32 as shown in Figs. 5 and 6. It should be noted that the sealing paste 30 and the sealing ring 32 may be used in combination or as alternatives.

As described above, the plug 6 comprises the collar 7 being arrangeable on the edge 5 of the sensor accommodation opening 2. In the embodiment of Figs. 5 and 6, the sensor accommodation opening cover 1 comprises a sealing ring 32 being arranged between the collar 7 of the plug 6 and the edge 5 of the sensor accommodation opening 2. The collar 7 may have a cut out for accommodating the sealing ring 32. The sealing ring 32 may be made of an elastic material and may further improve the sealing effect between the sensor accommodation opening 2 and the plug 6.

In summary, the herein described cover provides a cost efficient and lightweight solution for protecting a sensor accommodation opening.

### Reference numerals

- 1: cover
- 2: sensor accommodation opening
- 3: side wall of sensor accommodation opening
- 4: component
- 5: edge
- 6: plug
- 7: collar
- 8: gasket
- 9: closed side of plug
- 10: cover plate
- 11: side wall of plug
- 12: opening
- 16: hole
- 18: hole
- 20: hole
- 22: fixing means
- 24: distance ring
- 26: sealing ring
- 28: sealing ring
- 30: sealing paste
- 32: sealing ring

## Claims

1. Cover (1) for protecting a sensor accommodation opening (2) within a component (4), for example an axle box, wherein the cover (1) comprises a gasket (8) being arrangeable around the sensor accommodation opening (2), a cover plate (10) arranged on the gasket (8) for closing the sensor accommodation opening (2) and fixing means (22) for fixing the cover plate (10) to the component (4).

2. Cover according to claim 1, wherein the gasket (8) and the cover plate (10) are arrangeable around and/or on a plug (6) being received in the sensor accommodation opening (2) and are configured to secure the plug (6) within the sensor accommodation opening (2).

3. Cover according to claim 2, wherein a sealing paste (30) is arranged between a side wall (11) of the plug (6) and a side wall (3) of the sensor accommodation opening (2) being in contact with the plug (6).

4. Cover according to claim 2 or 3, wherein the plug (6) comprises a collar (7) being arrangeable on an edge (5) of the sensor accommodation opening (2).

5. Cover according to claim 4, further comprising a sealing ring (32), in particular an O-ring, being arranged between the collar (7) of the plug (6) and the edge (5) of the sensor accommodation opening (2).

6. Cover according to any one of the preceding claims, wherein the gasket (8) and the cover plate (10) are integrally formed or
wherein the gasket (8) and the cover plate (10) are separate elements.

7. Cover according to any one of the preceding claims, wherein the cover plate (10) and/or the gasket (8) comprise holes 16, 18) for receiving the fixing means (22).

8. Cover according to any one of the preceding claims, wherein the gasket (8) has a ring form, in particular
wherein the gasket (8) is a washer or an O-ring.

9. Cover according to claim 7, wherein the gasket (8) is made of an elastomeric material, a polymeric material and/or a metallic material.

10. Cover according to any one of the preceding claims, further comprising a sealing ring (26, 28) being arranged around the sensor accommodation opening (2) and between the gasket (8) and the sensor accommodation opening (2) for sealing the accommodation opening (2).

11. Cover according to any one of the preceding claims, wherein the fixing means (22) are screws and/or bolts.
